# EUROPÄISCHE PATENTSCHRIFT

(11) **EP 2 323 795 B1**
(45) Veröffentlichungstag und Bekanntmachung des Hinweises auf die Patenterteilung: **16.01.2013**
(21) Anmeldenummer: 09776068.0
(22) Anmeldetag: 07.08.2009
(51) Int. Cl.: B23D 11/00

(54) **STOSSAGGREGAT MIT EXZENTERKURBEL**
PUSH-TYPE UNIT HAVING ECCENTRIC CRANK
UNITÉ DE PERCUSSION AVEC MANIVELLE EXCENTRIQUE

(30) Priorität: 13.08.2008 DE 102008038927
(43) Veröffentlichungstag der Anmeldung: 25.05.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2009/001110
(87) Internationale Veröffentlichungsnummer: WO 2010/017806

(56) Entgegenhaltungen:
- DE-B3- 10 339 344
- US-A- 2 694 962

## Beschreibung

Die Erfindung betrifft ein Stoßaggregat mit einem an einem Gehäuse geführten Stoßschlitten, einem den Stoßschlitten über eine extern angetriebene Antriebswelle antreibendes Getriebe und einen Abhebemechanismus, bei dem sich der Stoßschlitten gegenüber seinem Arbeitshub zumindest in einem Teilbereich seines Rückhubs quer zum Arbeitshub um 0,05 bis 0,4 Millimetern versetzt entgegen der Werkzeugzustellbewegung zurückbewegt.

Aus der DE 103 39 344 B3 ist ein derartiges Stoßaggregat bekannt. Parallel zum Stoßschlitten ist eine extern angetriebene Walze angeordnet, in deren Außenmantel eine sinusförmig umlaufende Nut eingearbeitet ist. In diese Nut greift, zur Realisierung einer linearen Vorschubbewegung, ein am Stoßschlitten angeordneter Nocken ein. Zugleich ist der Mantel der Walze im Bereich einer Hälfte abgeflacht ausgeführt, so dass der mittels mechanischer Federn gegen die Walze gedrückte Stoßschlitten beim Rotieren der Walze quer zur Vorschubbewegung eine geringe Hubbewegung durchführt. Die sinusförmige Umlaufnut ist so auf die Abflachung abgestimmt, dass der Stoßschlitten das von ihm getragene Werkzeug beim Rückhub von der gerade zerspanten Werkstückoberfläche abhebt.

Der vorliegenden Erfindung liegt das Problem zugrunde, ein Stoßaggregat zu entwickeln, bei dem bei einem formsteifen Aggregateaufbau eine klare Funktionentrennung zwischen dem Vorschubantrieb und dem Antrieb für die Abhebebewegung des Stoßschlittens während des Rückhubes gewährleistet ist.

Das Problem wird mit den Merkmalen des Anspruchs 1 gelöst. Dazu ist das den Stoßschlitten bewegende Getriebe ein Schubkurbelgetriebe, bei dem die externe Antriebswelle über einen Kurbelzapfen und einen Pleuel auf den Stoßschlitten wirkt. Innerhalb des Stoßaggregats ist der Stoßschlitten in einem Schwingkörper über eine Schlittenführung geradgeführt. Der Schwingkörper ist am Gehäuse in einer Schwingkörperführung geradgeführt. Diese ist gegenüber der Schlittenführung um 2 bis 6 Winkelgrade geneigt. Der Schwingkörper liegt zur Realisierung der Abhebebewegung über mindestens eine Nocke oder mindestens ein Abstützrad an einer über die Antriebswelle angetriebene Exzenterscheibe an.

Damit wird eine Vorschubbewegung, die einen Arbeitshub und einen Rückhub umfasst, über ein reines Schubkurbelgetriebe verwirklicht. Die Abhebebewegung des Stoßschlittens, die erforderlich ist, damit zumindest die Hauptschneide des Stoßwerkzeugs beim Rückhub des Stoßschlittens geringfügig von der gerade spanend bearbeiteten Oberfläche schneidenschonend abgehoben wird, wird mit einem reinen Exzenterantrieb bewerkstelligt.

Die Vorschublänge wird konstruktiv mittels der Länge des Kurbelarms vorgegeben. Die quer zur Vorschubbewegung orientierte Abhebebewegung des Stoßschlittens wird konstruktiv durch die Exzentrizität der Exzenterscheibe und durch die zwischen der Führung des Stoßschlittens und der Führung eines Zwischenkörpers gelegene Neigung bestimmt. Der den Stoßschlitten wälzgelagert tragende Zwischenkörper ist dazu auf einer Rampe am Gehäuse gelagert. Durch die Rotation des Exzenters wird der an der Exzenterscheibe anliegende Zwischenkörper auf der Rampe hin und her bewegt, wodurch der Stoßschlitten die Abhebebewegung erfährt.

Je nach Ausführungsform kann der Zwischenkörper über einen Nocken gleitend oder über ein Abstützrad abwälzend an der Exzenterscheibe anliegen. Für die spielfreie Anlage zwischen dem Nocken bzw. dem Abstützrad und der Exzenterscheibe sorgt z.B. eine mechanische oder pneumatische Feder. Selbstverständlich kann die Exzenterscheibe auch zwischen zwei Abstützrädern zumindest nahezu spielfrei eingespannt sein.

Weitere Einzelheiten der Erfindung ergeben sich aus den Unteransprüchen und der nachfolgenden Beschreibung mindestens einer schematisch dargestellten Ausführungsform.
- Figur 1:: Perspektivische Ansicht des teilweise geschnittenen Stoßaggregats, bei abgenommenem Gehäuseoberteil;
- Figur 2:: Querschnitt L-L zu Figur 3;
- Figur 3:: Längsschnitt E-E zu Figur 2;
- Figur 4:: Längsschnitt J-J zu Figur 2;
- Figur 5:: Horizontalschnitt H-H zu Figur 3;
- Figur 6:: Horizontalschnitt I-I zu Figur 3;
- Figur 7:: Perspektivische Ansicht des Schwingschlittens;
- Figur 8:: wie Figur 7, jedoch von unten;
- Figur 9:: Horizontalschnitt I-I bei Beginn des Arbeitshubs;
- Figur 10:: wie Figur 9 am Ende des Arbeitshubs;
- Figur 11:: wie Figur 10 bei Beginn des Rückhubs mit konstantem Versatz;
- Figur 12:: wie Figur 11 am Ende des Rückhubs mit konstantem Versatz;
- Figur 13:: Vorder Teil des Stoßschlittens mit einzusetzendem Werkzeug.

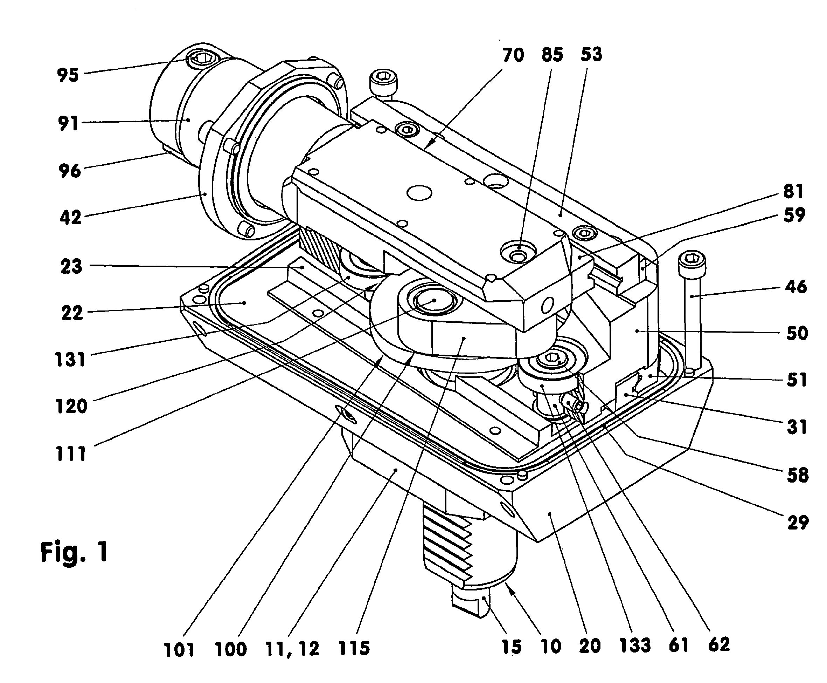

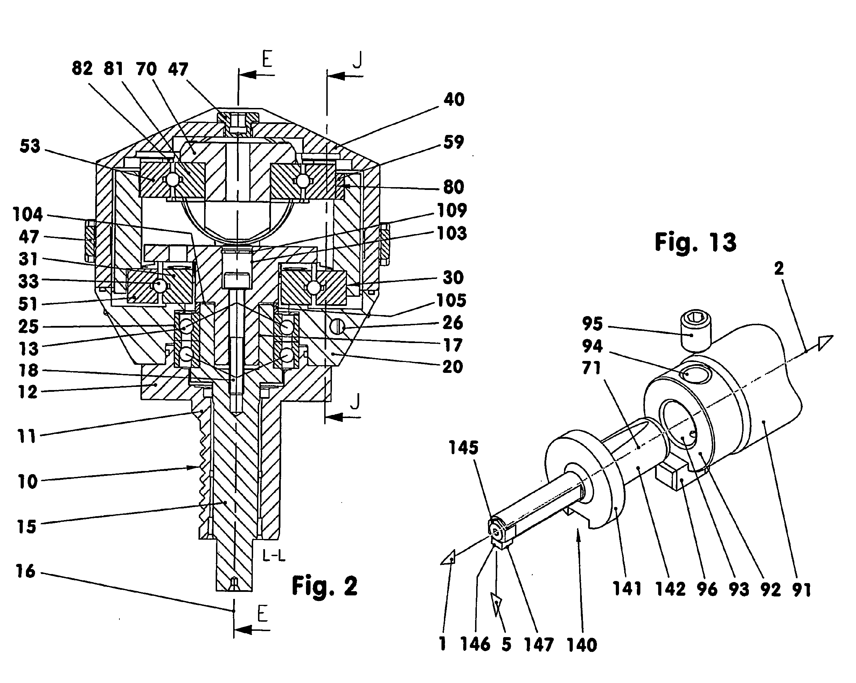

Die Figur 1 zeigt ein Stoßaggregat mit abgenommenem Gehäuseoberteil (40), vgl. Figur 2, und einem vertikal längsgeschnittenen Schwingkörper (50). Das Stoßaggregat, das hier z.B. ein Nutstoßaggregat ist, wird beispielsweise auf multifunktionalen Fertigungsmaschinen verwendet. So kann ein derartiges Nutstoßaggregat in einer CNC-Drehmaschine eingesetzt werden, um in die Bohrung eines eingespannten Drehwerkstücks eine Passfederinnennut oder eine Innenverzahnung zu stoßen. Dazu wird das Stoßaggregat über einen VDI-Halter (10) in einem Revolverkopf fixiert. Im VDI-Halter (10) ist eine Antriebswelle (15) angeordnet, deren Rotationsbewegung im Gehäuse (20, 40) des Stoßaggregats mittels eines Schubkurbelgetriebes (100) in eine oszillierende Linearbewegung eines im Gehäuse (20, 40) geführten Stoßschlittens (70) umgewandelt wird. Das Gehäuse besteht dabei aus einem Grundkörper (20) und einem Gehäuseoberteil (40).

Der Grundkörper (20) ist nach Figur 1 ein wannenförmiger, formsteifer Körper, dessen seitliche Flanken sich nach unten hin z.B. um 30 Winkelgrade verjüngen. Er weist an seiner Oberseite zum einen eine umlaufende Dichtnut (29) zur Aufnahme einer Dichtung auf und hat zum anderen einen nach hinten - also weg vorn Werkzeug (140), vgl. Figur 13 - abfallenden Boden (22). Am Boden (22) sind Abstützstege (23) zur Anlage einer Schwingkörperführung (30) angeordnet. Im Boden (22) befindet sich eine von unten gebohrte Stufenbohrung (25) zur Aufnahme des VDI-Adapters (10) und der Antriebswelle (15), vgl. Figur 2.

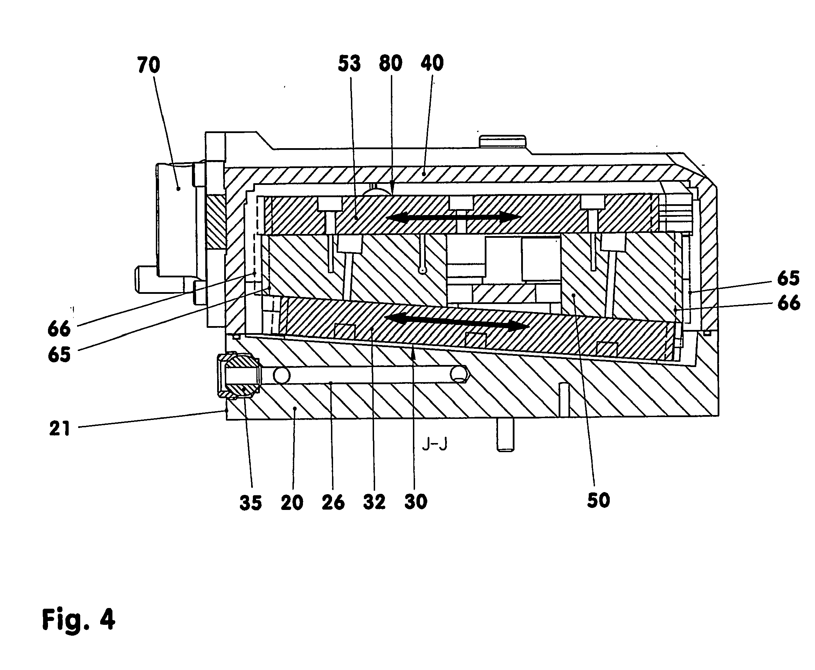

Die Figuren 2 und 4 zeigen sich unterhalb der Schwingkörperführung (30) einseitig eine Kühlmittelbohrung (26), die eine VDI-Halterseitige Kühlmittelzufuhr mit der Gehäusestirnfläche (21) verbindet. Aus der Gehäusestirnfläche (21) ragt ein - hier nicht dargestelltes - zur Bearbeitungsstelle ausgerichtetes Strahlrohr heraus, das in einer durchbohrten und von einer dichtenden Schraube gehaltenen Kugelkalotte (35) winkelverstellbar gelagert ist.

Der VDI-Halter (10) besteht im Wesentlichen aus einem Adapterkörper (11) und der Antriebwelle (15). Der Adapterkörper (11) hat in seinem oberen Bereiche eine Flanschplatte (12), die zentriert in der Stufenbohrung (25) des Grundkörpers (20) befestigt ist und dabei an der Unterseite (24) des Grundkörpers (20) anliegt. In der Flanschplatte (12) und in der Stufenbohrung (25) ist die Antriebswelle (15) z.B. in zwei in O-Anordnung positionierten Schulterlagern (13) gelagert.

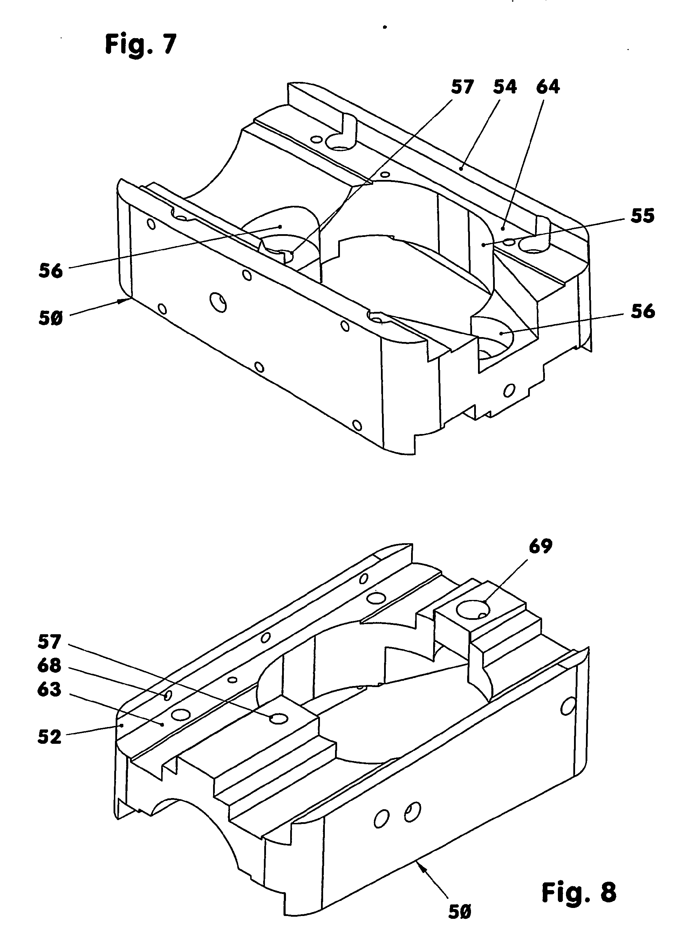

Auf dem Boden (22), der gegenüber der ebenen Unterseite (24) um vier Winkelgrade geneigt ist, sind vor den Abstützstegen (23) die Abhebeführungsleisten (31) der Schwingkörperführung (30) befestigt. Die an den Abhebeführungsleisten (31) über Wälzkörper (33) geführten unteren Schwingkörperleisten (51) tragen einen in den Figuren 7 und 8 separat dargestellten Schwingkörper (50).

Figur 8 zeigt den Schwingkörper (50), der im Wesentlichen eine Keilform hat, von unten. Auf den Montageflächen (63), die zu den Seitenwandungen des Schwingkörpers (50) hin Stützstege (52) aufweisen, sind die unteren Schwingkörperleisten (51) befestigt. In den Gewindebohrungen (68) des linken Stützstegs (52) sitzen beim montierten Stoßaggregat Gewindestifte, mit deren Hilfe das Führungsspiel der Schwingkörperführung (30) eingestellt wird. Die zwischen einer Abhebeführungsleiste (31) und der entsprechenden unteren Schwingkörperleiste (51), vgl. Figur 2, in einem Flachkäfig angeordneten Wälzkörper (33) können z.B. Kugeln oder gekreuzt angeordnete Zylinderwalzen sein.

In der Ansicht nach Figur 7 sind die Montageflächen (64) für zwei weitere Schwingkörperleisten (53) dargestellt, vgl. auch Figur 2. Diese oberen Schwingkörperleisten (53) gehören zu der den Stoßschlitten (70) führenden Schlittenführungen (80). Die komplementären Gegenstücke der oberen Schwingkörperleisten (53) sind die am Stoßschlitten (70) angeschraubten Schlittenleisten (81). Die Schlittenführung (80) ist baugleich zur Schwingkörperführung (30). Allerdings ist zwischen dem oberen, rechten Stützsteg (54) und der oberen Schwingkörperleiste (53) eine eingeschliffene Justierleiste (59) angeordnet, vgl. Figu-ren 1 und 2.

Im vorliegenden Ausführungsbeispiel sind zumindest bei der Schlittenführung (80) die Flachkäfige über Zahnräder zwischen den Leisten (53, 81) zwangsgeführt. Dazu ist an jeder Leiste (53, 81) eine zum Flachkäfig hin orientierte Zahnstange (82) befestigt. Zwischen beiden Zahnstangen (82) sitzt im Flachkäfig mindestens ein Stirnrad, das mit beiden Zahnstangen (82) kämmt.

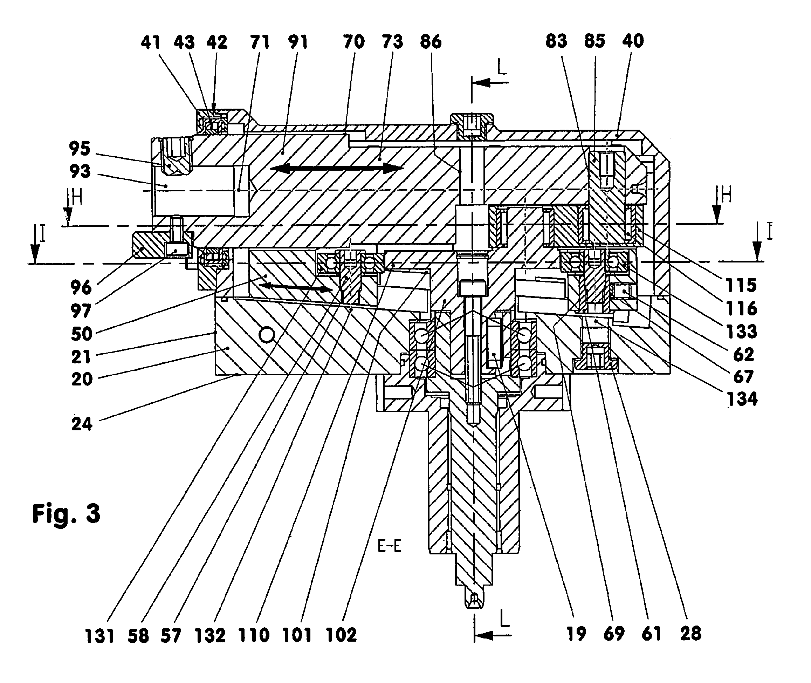

Die Montageflächen (64) der oberen Schwingkörperleisten (53) sind bei montiertem Stoßaggregat parallel zur Unterseite (24) des Grundkörpers (20) ausgerichtet. Zwischen den Montageflächen (64) befindet sich, nach Figur 7, eine im Horizontalschnitt polygonförmige Ausnehmung (55). In Längsrichtung sind vor und hinter der Ausnehmung (55) je eine Stufensenkung (56) eingearbeitet, in denen nach den Figuren 1 und 3 die beiden Abstützräder (131, 133) montiert werden.

Der im Schwingkörper (50) geführte Stoßschlitten (70) besteht aus einem Führungsabschnitt (73) und einem Werkzeugadapterabschnitt (91). Der Führungsabschnitt (73) des Stoßschlittens (70) hat zumindest annähernd die Form eines Quaders, an dessen Seitenflächen die Schlittenleisten (81) angeordnet sind. Dabei sind die Schlittenleisten (81) am Führungsbereich so positioniert, dass die durch die der Mittel- oder Schwerpunkte gebildete Mittelebene der Wälzkörper (33) der Schlittenführung (80) z.B. 1,7 Millimeter oberhalb der Mittellinie (71) des Stoßschlittens (70) liegt.

Nach hinten hin verjüngt sich der Stoßschlitten (70) an seiner Unterseite, um Platz für das Schubkurbelgetriebe (100) zu lassen. In diesem Bereich ist in einer Bohrung (83) der Schlittenzapfen (85) z.B. spielfrei eingestaucht. Seine Mittellinie schneidet die Mittellinie (71) des Stoßschlittens (70). Im mittleren Bereich hat der Führungsabschnitt (73) eine Durchgangsbohrung (86), über die ein Teil (101) des Schubkurbelantriebs (100) an der Antriebwelle (15) mittels eines Werkzeugs verschraubt werden kann.

An den Führungsabschnitt (73) schließt sich der Werkzeugadapterabschnitt (91) an. Letzterer hat im Wesentlichen z.B. eine zylindrische Form zur gleitenden Durchführung durch die Kopfdichtung (42) des Gehäuseoberteils (40). Nach Figur 13, eine Explosionsdarstellung, hat der Werkzeugadapterabschnitt (91) eine plane, ggf. feinbearbeitete Stirnfläche (92), die senkrecht zur Mittellinie (71) des Stoßschlittens (70) ausgerichtet ist. Mittig in die Stirnfläche (92) ist eine Adapterbohrung (93), z.B. als Sacklochbohrung eingearbeitet. Zumindest annähernd quer zur Adapterbohrung (93), befindet sich eine Gewindebohrung (94) mit einer Zylindersenkung, zur Aufnahme einer Spannschraube (95). Die Mittellinie der Gewindebohrung (94) schneidet die Mittellinie (71) unter Einschluss eines 88°-Winkels. Die Mittellinie der Gewindebohrung (94) ist dabei nach vorn geneigt.

Die Adapterbohrung (93) und die Gewindebohrung (94) sind bezüglich ihrer geometrischen Abmessungen als Form E in der DIN 1835-2 beschrieben. Der Stoßschlitten (70) weist nach Figur 13 an seiner Unterseite im Werkzeugadapterabschnitt (91) eine kurze Längsnut auf, in der als Zentrierelement eine Passfeder (96) mit rechteckigem Querschnitt sitzt. Die vorderen Passfederkanten sind zur Erleichterung des Werkzeugwechsels angefast. Die Passfeder (96) ist am Stoßschlitten (70) mit einer Schraube (97) fixiert, vgl. Figur 3.

In der Figur 13 ist beispielhaft das Werkzeug (140) separat dargestellt. Es besteht z.B. aus einem Werkzeugträger (141) und einer Schneidplatte (145). Der rückwärtige Schaft (142) des Werkzeugträgers (141) wird bei der Montage in die Adapterbohrung (93) gesteckt und mittels der Spannschaube (95) fixiert. Die Schneidplatte (145) des Ausführungsbeispiels wird zum Nutstoßen von Passfedernuten nach DIN 138 benutzt. Dazu hat die Schneidplatte (145) u.a. eine Hauptschneide (146). Die Hauptschneide (146) und deren Freifläche (147) sind in Figur 13 dargestellt.

Auf dem Grundkörper (20) sitzt das Gehäuseoberteil (40) zentriert durch Zylinderstifte und befestigt mittels vier Schrauben (46). Das zumindest bereichsweise dickwandige Gehäuseoberteil (40) sitzt dicht und formschlüssig auf dem Grundkörper (20), u.a. um dessen Formsteifigkeit zu erhöhen. Das Gehäuseoberteil (20) hat vorn eine kreisrunde Ausnehmung, in der ein die Kopfdichtung (42) tragender Dichtflansch (41) sitzt, vgl. Figur 1. Die Kopfdichtung (42), vgl. Figur 3, besteht u.a. aus einem formsteifen Ring (43), der einen zum Werkzeugadapterabschnitt (91) hin orientierten Rechteckkanal aufweist. Im Rechteckkanal ist die auf dem Werkzeugadapterabschnitt (91) gleitende Dichtung elastisch gelagert. Der Ring (43) selbst sitzt axial abgedichtet mit einem zulässigen radialen Seitenversatz von ±2 Millimeter zwischen dem Dichtflansch (41) und dem Gehäuseoberteil (40).

An jeder Seitenwand und an der Oberseite des Gehäuseoberteils (40) befindet sich jeweils eine dicht sitzende Verschlussschraube (47). Die seitlichen Verschlussschrauben (47) dienen der Fettschmierung der gehäuseinternen Getriebe und Führungen (30, 80). Die obere Verschlussschraube (47) verschließt den Zugang zur Verschraubung der Antriebwelle (15).

Zwischen dem Grundkörper (20) und dem Stoßschlitten (70) sind zwei ggf. voneinander unabhängige Getriebe (100, 120) angeordnet. Das erste Getriebe ist ein Schubkurbelgetriebe (100), das die Rotation der Antriebswelle (15) in eine lineare Hin- und Herbewegung des Stoßschlittens (70) wandelt. Dabei ist die ausfahrende Bewegung des Stoßschlittens (70) teilweise der Arbeitshub (1) und die entgegen gerichtete Bewegung der Rückhub (2).

Die Kurbel des Schubkurbelgetriebes (100) ist eine Exzenterkurbel (101), die mittels einer Zentralschraube (18) und einer Passfeder (96) drehstarr mit der Antriebswelle (15) verbunden ist. Dazu hat die Antriebswelle (15) in ihrer oberen Stirnseite eine zentrale Sacklochbohrung (17). Letztere hat im Bohrungsgrund eine Gewindebohrung zur Aufnahme der Zentralschraube (18) und in ihrer zylindrischen Wandung eine Passfedernut zur drehmomentübertragenden Führung der Passfeder (19).

Die Exzenterkurbel (101) besteht aus einem zweistufigen Wellenabschnitt (102), einer Exzenterscheibe (110) und einem Kurbelzapfen (111). Der untere Teil des Wellenabschnitts (102) trägt in einer Passfedernut die Passfeder (19). Am Übergang zum darüber liegenden, oberen Teil des Wellenabschnitts (102) befindet sich ein planer Wellenbund (104), an dem eine Distanzhülse (105) zur axialen Fixierung der auf der Antriebselle (15) sitzenden Schulterlager (13) dient. Nach Figur 3 schließt sich an den Wellenabschnitt (102) nach oben hin die Exzenterscheibe (110) an, die mit einem Versatz - von z.B. 17,5 Millimetern - zur Mittellinie (16) der Antriebswelle (15) den zylindrischen Kurbelzapfen (111) trägt.

Im Zentrum der Exzenterscheibe (110) ist eine Stufendurchgangsbohrung (103) angeordnet, über die die Exzenterkurbel (101) in der Antriebswelle (15) steckt. Im oberen Teil der Stufendurchgangsbohrung (103) sitzt ein Sicherungsring (109) der die Zentralschraube (18) verliersicher in der Bohrung (103) hält.

Zwischen dem Kurbelzapfen (111) und dem Schlittenzapfen (85) ist ein Pleuel (115) z.B. wälzgelagert angeordnet. Es ist in den Figuren 3, 5 und 6 in der Strecklage dargestellt. Der Pleuel (115) hat für die Lagerung am Kurbelzapfen (111) eine Stufenbohrung, in der der Außenring eines doppelschultrigen Nadellagers (116) eingepresst ist. Zur Ankopplung am Schlittenzapfen (85) hat der Pleuel (115) z.B. eine Sacklochbohrung, in der ebenfalls der Außenring eines zumindest vergleichbaren Nadellagers (116) sitzt.

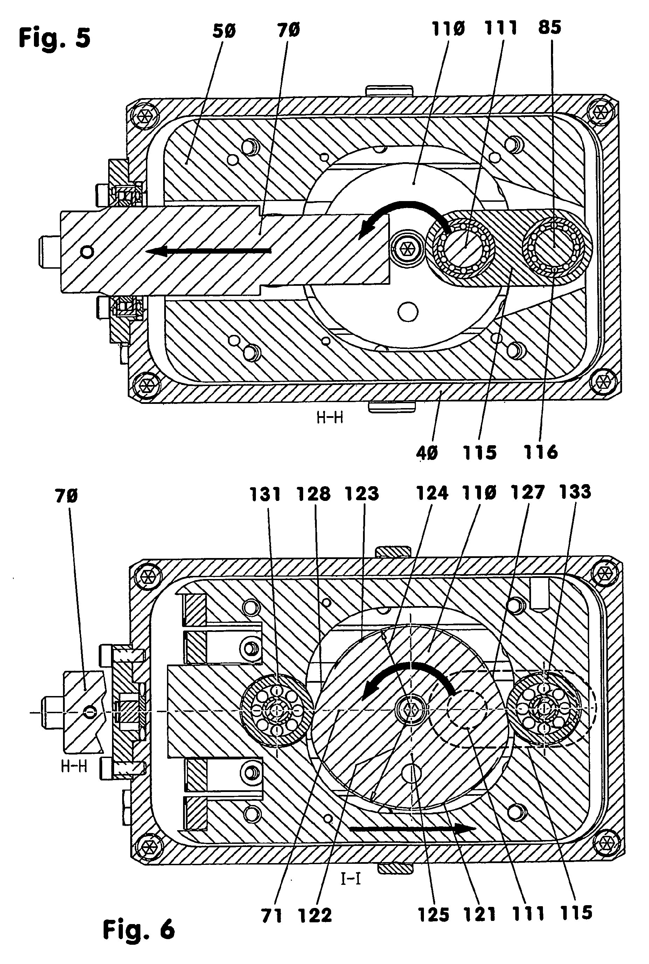

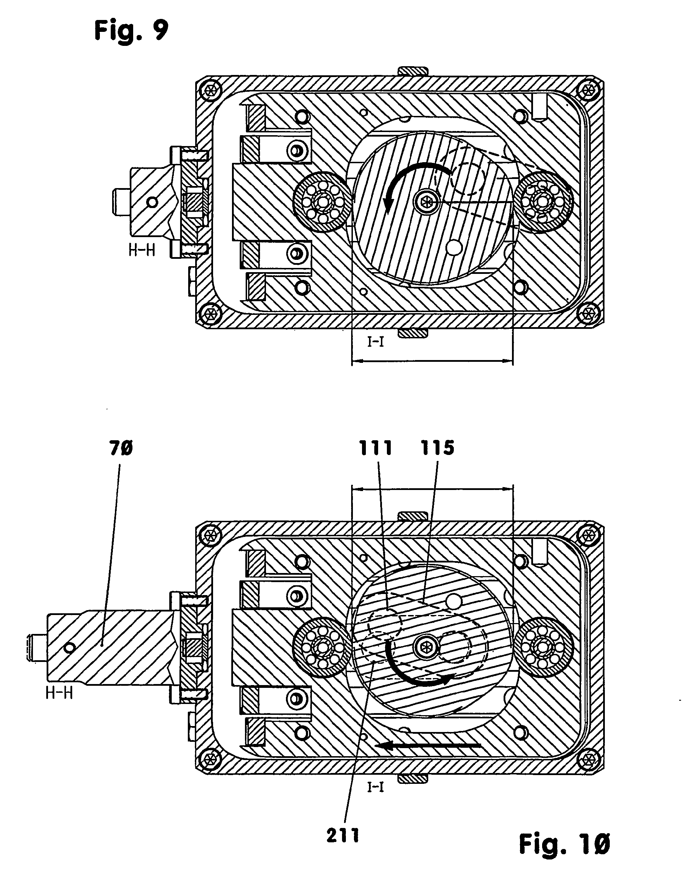

Um nun den Stoßschlitten (70) hin und her zu bewegen, wird die Antriebswelle (15) nach den Figuren 5 und 6 im Gegenuhrzeigersinn z.B. über die aggregatetragende Werkzeugmaschine angetrieben. Die Bewegung des Schubkurbelgetriebes (100) lässt sich den Figuren 9 bis 12 entnehmen, siehe u.a. den gestrichelt dargestellten Pleuel (115) und den im Teilschnitt H-H gezeigten Stoßschlitten (70).

Das zweite zwischen dem Stoßschlitten (70) und dem Grundkörper (20) gelegene Getriebe ist ein Exzentergetriebe (120). Die Exzenterscheibe (110) ist hier bei dieser Ausführungsvariante ein integraler Bestandteil der Exzenterkurbel (101). Die Exzenterscheibe (110) stützt sich an zwei, am Schwingkörper (50) gelagerten Abstützrollen (131, 133) ab.

Nach Figur 3 sind die z.B. baugleichen Abstützräder (131, 133) jeweils Kugellager mit verstärkten Außenringen, wobei die Au-βenringe ggf. außen eine ballige Lauffläche aufweisen. Die Abstützräder (131, 133) sitzen auf Passschrauben (58). Die vordere Passschraube (58) ist direkt in eine entsprechende Gewindebohrung (57) des Schwingkörpers (50) eingeschraubt. Die hintere Passschraube (57) ist in eine Exzenterhülse (61) eingeschraubt, die gegenüber der tragenden Bohrung (69) mittels eines Gewindestifts (62) und einer Klemmscheibe (63) am Schwingkörper (50) radial fixiert ist. Die Gewindebohrung der Exzenterhülse (61) hat gegenüber ihrer zylindrischen Außenkontur einen Versatz von z.B. 0,15 Millimetern. Um die Exzenterhülse (61) z.B. mit einem Sechskantschlüssel feinverstellen zu können, befindet sich im Grundkörper (20) in der Verlängerung der hinteren Passschraube (58) eine durch eine Verschlussschraube (28) angedichtete Bohrung.

Zwischen dem Innenring der Abstützräder (131, 133) und dem Schwingkörper (50) liegt jeweils ein Distanzring.

Die beiden Abstützräder (131, 133) haben Mittellinien (132, 134), die parallel zur Mittellinie (16) ausgerichtet sind. Sie liegen zumindest annähernd in einer Ebene, in der zugleich die Mittellinie (71) des Stoßschlittens (70) liegt. Die Abweichung mindestens einer vertikalen Mittellinie (16, 132, 134) - bezogen auf die Darstellungen in den Figuren 1 bis 13 - kann bis zu 0,2 Millimeter betragen.

Die Exzenterscheibe (110), vgl. Figur 6, hat eine Außenkontur, die aus zwei Bögen (121, 123) und zwei Übergangskurven (127, 128) gebildet wird. Die Bögen (121, 123) sind in den Figuren 6 und 9 bis 12 als Doppellinien dargestellt. Der Radius (124) des kleinen Bogens (123) ist 27 Millimeter lang. Der Radius (122) des großen Bogens (123) ist 4,5 Millimeter länger. Beide Radien (122, 124) haben als Zentrum die Mittellinie (16). Beide Bögen (121, 123) sind durch einen Zentriwinkel von z.B. 120 Winkelgraden beidseitig begrenzt, wobei die Winkelhalbierenden (125) beider Zentriwinkel zueinander fluchten und quer zur Mittellinie (71) des Stoßschlittens (70) orientiert sind.

Die beiden zwischen den Bögen (121, 123) gelegenen Übergangskurven (127, 128) haben idealerweise eine Krümmung, die es ermöglicht, dass die Exzenterscheibe (110) bei einem konstanten Abstand der beiden Mittellinien (132, 134) der Abrollräder (131, 133) an beiden Abrollrädern unabhängig vorn jeweiligen Schwenkwinkel der Exzenterscheibe (110) anliegen. Dabei stellt die Winkelhalbierende (125) des Zentriwinkels die Spiegelachse für die beiden Übergangskurven (127, 128) dar.

Nach Figur 6 liegen die Abstützräder (131, 133) an den Übergangskurven (127, 128) an. Der Schwingkörper (50) liegt in der in den Figuren 3 und 4 dargestellten Mittellage. Wird nun die Exzenterscheibe (110) in Pfeilrichtung um 30 Winkelgrade geschwenkt, kommen nach Figur 9 die Bögen (121, 123) in Kontakt mit dem Abstützrädern (131, 133). Gleichzeitig wurde der Schwingkörper (50) gegenüber dem Gehäuse (20, 40) nach hinten in Richtung (2) um z.B. 2,25 Millimeter verschoben, vgl. die strichpunktierten stirnseitigen Körperkanten (65) des Schwingkörpers (50) nach Figur 4. Dadurch wurde der Stoßschlitten (70) in Zustellrichtung (5) um ca. 0,15 Millimeter abgesenkt. Letzteres ist in den Figuren 3 und 4 nicht dargestellt.

Bei einer weiteren Schwenkbewegung um 120 Winkelgrade verändert der Schwingkörper (50) seine Lage gegenüber dem Gehäuse (20, 40) nicht, vgl. Figur 10. Der Stoßschlitten (70) befindet sich in seinem geradlinigen Arbeitshub (1).

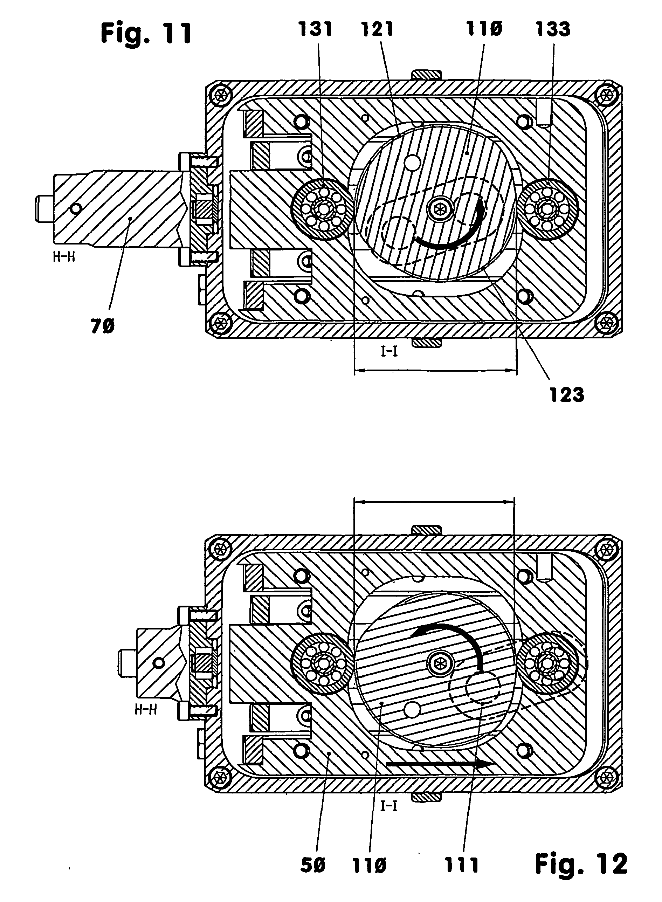

Eine Lageänderung ergibt sich erst, wenn die Übergangskurven (127, 128) bei der weiteren Schwenkbewegung um ca. 60 Winkelgrade an dem Abstützrädern (131, 133) abrollen. Hierbei wird der Schwingkörper (50) gegenüber dem Gehäuse (20, 40) um z.B. 4,5 Millimeter nach vorn - unter einem Aufwärtshub von ca. 0,3 Millimetern entgegen der Richtung (5) - verschoben, vgl. in Figur 4 die gestichelten stirnseitigen Körperkanten (66) des Schwingkörpers (50). Bei dieser - zwischen den Darstellungen der Figuren 10 und 11 gelegenen - Bewegung hat der Schlittenzapfen (85) des Stoßschlittens (70) seinen vorderen Totpunkt durchlaufen und der Stoßschlitten (70) seine Bewegungsrichtung umgekehrt.

Bei der weiteren Schwenkbewegung um ca. 120 Winkelgrade, ausgehend von Figur 11, bei der die Bögen (121, 123) der Exzenterscheibe (110) wieder die Abstützräder (131, 133) kontaktieren, läuft der Stoßschlitten (70) ohne vertikale Lageänderung zurück. Die Phase des geradlinigen Rückhubs (2) ist beendet, sobald die Exzenterscheibe (110) die in Figur 12 dargestellte Position erreicht hat.

In Figur 12 steht der Kurbelzapfen (111) des Schubkurbelantriebs (100) fast vor dem hinteren Totpunkt. Dieser wird erreicht, wenn sich von hier aus die Exzenterscheibe (110) um z.B. weitere 30 Winkelgrade im Gegenuhrzeigerdrehsinn weiterdreht. Dabei wird dann der Schwingkörper (50) um ca. 2,25 Millimeter nach rechts verlagert, vgl. Figur 6. Nun haben sowohl der Stoßschlitten (70) als auch der Schwingkörper (50) in Abhängigkeit einer 360-Winkelgraddrehung der Exzenterkurbel (101) einen kompletten Bewegungszyklus absolviert. Bei einer fortgesetzten Drehung der Exzenterkurbel beginnt der Bewegungszyklus von vorn.

Nach den Figuren 3, 5 und 6 sitzt der Kurbelzapfen (111) auf der Mittellinie (71) des Stoßschlittens (70) hinter der Mittellinie (16) der Antriebswelle (15). Die Winkelhalbierende (125) des Zentriwinkels steht senkrecht zu beiden Mittellinien (16) und (71). In einer weiteren Alternative, bei der der geradlinige Arbeitshub (1) genau dann endet, wenn der Stoßschlitten (70) seine vordere Position erreicht hat, also der Schlittenzapfen (85) seinen vorderen Totpunkt gerade durchläuft, muss der Kurbelzapfen (111) gegenüber seiner bisherigen Position um z.B. 30 Winkelgrade im Gegenuhrzeigersinn versetzt auf der Exzenterscheibe (110) angeordnet werden. Diese versetzte Position zeigen in Figur 10 der gestrichelt dargestellte Kurbelzapfen (211).
In diesem Zusammenhang ist es denkbar, den Kurbelzapfen (211) manuell oder maschinell gegenüber der Exzenterscheibe (110) verstellbar anzuordnen.

### Bezugszeichenliste:

- 1: Arbeitshub; Hubrichtung, vorwärts
- 2: Rückhub; Hubrichtung, rückwärts
- 5: Werkzeugzustellbewegung
- 10: VDI-Halter
- 11: Adapterkörper
- 12: Flanschplatte
- 13: Schulterlager
- 15: Antriebswelle
- 16: Mittellinie
- 17: Sacklochbohrung
- 18: Zentralschraube
- 19: Passfeder
- 20: Grundkörper
- 21: Gehäusestirnfläche
- 22: Boden
- 23: Abstützstege
- 24: Unterseite
- 25: Stufenbohrung
- 26: Kühlmittelzuführung
- 28: Verschlussschraube
- 29: Dichtnut
- 30: Schwingkörperführung
- 31: Abhebeführungsleiste
- 32: untere Schwingkörperleisten
- 33: Wälzkörper
- 35: Kugelkalotte

- 40: Gehäuseoberteil
- 41: Dichtflansch
- 42: Kopfdichtung
- 43: Ring
- 46: Schrauben
- 47: Verschlussschrauben
- 50: Schwingkörper, Zwischenkörper
- 51: untere Schwingkörperleiste
- 52: Stützstege
- 53: obere Schweinkörperleiste
- 54: Stützstege
- 55: Ausnehmung, polygonal
- 56: Stufensenkungen
- 57: Gewindebohrung
- 58: Passschrauben
- 59: Justierleiste
- 61: Exzenterhülse
- 62: Gewindestift
- 62: Klemmscheibe
- 63: Montagefuge für (51)
- 64: Montagefuge für (53)
- 65: Körperkanten in hinterer, unterer Position; strichpunktiert
- 66: Körperkanten in vorderer, oberer Position; Gestrichelt
- 68: Gewindebohrungen
- 69: Bohrung

- 70: Stoßschlitten
- 71: Mittellinie
- 73: Führungsabschnitt
- 80: Schlittenführung
- 81: Schlittenleisten
- 82: Zahnstangen
- 83: Bohrung
- 85: Schlittenzapfen
- 86: Durchgangsbohrung
- 91: Werkzeugadapterabschnitt
- 92: Stirnfläche
- 93: Adapterbohrung
- 94: Gewindebohrung
- 95: Spannschraube
- 96: Passfeder
- 97: Schraube
- 100: Schubkurbelgetriebe
- 101: Exzenterkurbel, Teil
- 102: Wellenabschnitt, zweistufig
- 103: Stufendurchgangsbohrung
- 104: Wellenbund
- 105: Distanzhülse
- 109: Sicherungsring, Verliersicherung
- 110: Exzenterscheibe
- 111, 211: Kurbelzapfen
- 115: Pleuel
- 116: Nadellager

- 120: Exzentergetriebe
- 121: Kreisbogen, Bogen, groß
- 122: Radius, groß
- 123: Kreisbogen, Bogen, klein
- 124: Radius, klein
- 125: Winkelhalbierende der Zentriwinkel
- 127, 128: Übergangskurven, rechts, links
- 131: Abstützrad, vorn
- 132: Mittellinie
- 133: Abstützrad, hinten
- 134: Mittellinie
- 140: Werkzeug
- 141: Werkzeughalter
- 142: Werkzeugschaft
- 145: Schneidplatte
- 146: Hauptschneide
- 147: Freifläche

## Patentansprüche

1. Stoßaggregat mit einem an einem Gehäuse (20, 40) geführten Stoßschlitten (70), einem den Stoßschlitten (70) über eine extern angetriebene Antriebswelle (15) antreibendes Getriebe (100) und einem Abhebemechanismus, bei dem sich der Stoßschlitten (70) gegenüber seinem Arbeitshub (1) zumindest in einem Teilbereich seines Rückhubs (2) quer zum Arbeitshub um 0,05 bis 0,4 Millimetern versetzt entgegen der Werkzeugzustellbewegung (5) zurückbewegt, **dadurch gekennzeichnet,**
- **dass** das Getriebe (100) ein Schubkurbelgetriebe ist, wobei eine Antriebswelle (15) über einen Kurbelzapfen (111) und einen Pleuel (115) auf den Stoßschlitten (70) wirkt,
- **dass** der Stoßschlitten (70) in einem Schwingkörper (50) über eine Schlittenführung (80) geradgeführt ist,
- **dass** der Schwingkörper (50) am Gehäuse (20, 40) in einer Schwingkörperführung (30) geradgeführt ist, die gegenüber der Schlittenführung (80) um 2 bis 6 Winkelgrade geneigt ist,
- **dass** der Schwingkörper (50) über mindestens eine Nocke oder mindestens ein Abstützrad (131, 133) an einer über die Antriebswelle (15) angetriebene Exzenterscheibe (110) anliegt.

2. Stoßaggregat gemäß Anspruch 1, **dadurch gekennzeichnet, dass** die Exzenterscheibe (110) zwischen zwei Abstützrädern (131, 133) angeordnet ist, wobei die Mittellinien (132, 134) der Abstützräder (131, 133) und der Exzenterscheibe (110) in einer Ebene liegen.

3. Stoßaggregat gemäß Anspruch 2, **dadurch gekennzeichnet, dass** der Abstand zwischen den Mittellinien (132, 134) der Abstützräder (131, 133) über eine volle Umdrehung der Exzenterscheibe (110) konstant ist.

4. Stoßaggregat gemäß Anspruch 1, **dadurch gekennzeichnet, dass** die Exzenterscheibe (110) einen Querschnitt hat, der durch zwei einander gegenüberliegenden Kreisbögen (121, 123) begrenzt ist, die jeweils den gleichen zwischen 110 und 130 Winkelgraden liegenden Zentriwinkel aufweisen, wobei die zwischen den Kreisbögen (121, 123) liegenden Übergangskurven (127, 128) zueinander spiegelsymmetrisch sind.

5. Stoßaggregat gemäß Anspruch 1, **dadurch gekennzeichnet, dass** die Mittellinie (16) und Rotationsachse der Exzenterscheibe (110) rechtwinkelig zum größten Teil des Arbeitshub (1) orientiert ist.

6. Stoßaggregat gemäß Anspruch 1, **dadurch gekennzeichnet, dass** die Antriebswelle (15) und der Kurbelzapfen (111) über die Exzenterscheibe (110) miteinander verbunden sind, wobei die Mittellinien der Antriebswelle (15) und der Exzenterscheibe (110) deckungsgleich sind.

7. Stoßaggregat gemäß Anspruch 1, **dadurch gekennzeichnet, dass** die Mittellinie des Kurbelzapfens (111) parallel zur Mittellinie (16) der Antriebswelle (15) orientiert ist.

8. Stoßaggregat gemäß Anspruch 1, **dadurch gekennzeichnet, dass** der Rückhubversatz des Stoßschlittens (70) in einer Ebene liegt, die von der Mittellinie (71) des Stoßschlittens (70) und der Mittellinie (16) der Antriebsspindel (15) aufgespannt wird.

9. Stoßaggregat gemäß Anspruch 1, **dadurch gekennzeichnet, dass** die Schlittenführung (80) aus zwei Paar Führungsleisten (53, 81) besteht, wobei die Mittel- oder Schwerpunkte der Wälzkörper (33) der Schlittenführung (80) in einer Ebene liegen, die von der Mittellinie (71) des Stoßschlittens (70) nicht mehr als drei Millimeter entfernt ist.

10. Stoßaggregat gemäß Anspruch 9, **dadurch gekennzeichnet, dass** diese Ebene senkrecht zur Mittellinie (16) der Antriebwelle (15) orientiert ist.

## Claims

1. Shaping unit comprising a shaper carriage (70) guided on a housing (20, 40), a transmission assembly (100) driving shaper carriage (70) via an externally powered drive shaft (15), and a lifting mechanism configured to move shaper carriage (70) rearwardly against the direction of tool advance (5) to perform a 0.05 to 0.4 mm offset transverse to the working stroke (1) in at least part of its return stroke (2) relative to said working stroke, **characterized in that**
- transmission assembly (100) is a pusher crank transmission, wherein a drive shaft (15) acts upon shaper carriage (70) via a crank pin (111) and a connecting rod (115);
- shaper carriage (70) is guided linearly in an oscillating body (50) via carriage guide means (80);
- oscillating body (50) is linearly guided on housing (20, 40) in oscillating body guide means (30) inclined 2° to 6° of an angle relative to carriage guide means (80); and
- oscillating body (50) engages via at least one cam or at least one supporting wheel (131, 133) an excentric disk (110) powered through drive shaft (15).

2. Shaping unit as claimed in claim, **characterized in that** excentric disk (110) is disposed between two supporting wheels (131, 133), with the centre lines (132, 134) of supporting wheels (131, 133) and of excentric disk (110) lying in one plane.

3. Shaping unit as claimed in claim 2, **characterized in that** the spacing between centre lines (132, 134) of supporting wheels (131, 133) is constant through one full revolution of excentric disk (110).

4. Shaping unit as claimed in claim 1, **characterized in that** excentric disk (110) has a cross-sectional shape delimited by two mutually opposite arcs (121, 123) of a circle, each said arcs having the same central angle between 110° and 130°, and that the curved transitions (127, 128) extending between arcs (121, 123) are mirror-symmetrical relative to each other.

5. Shaping unit as claimed in claim 1, **characterized in that** centre line (16) and axis of rotation of excentric disk (110) is oriented at right angles to a major portion of working stroke (1).

6. Shaping unit as claimed in claim 1, **characterized in that** drive shaft (15) and crank pin (111) are coupled through excentric disk (110), with the centre lines of drive shaft (15) and of excentric disk (110) being congruent.

7. Shaping unit as claimed in claim 1, **characterized in that** the centre line of crank pin (111) is oriented to be parallel with the centre line (16) of drive shaft (15).

8. Shaping unit as claimed in claim 1, **characterized in that** the return stroke offset of shaper carriage (70) lies in a plane extended by shaper carriage (70) centre line (71) and drive spindle (15) centre line (16).

9. Shaping unit as claimed in claim 1, **characterized in that** carriage guide means (80) comprises two pairs of guide rails (53, 81), with the centre points, or centres of gravity, of rolling members (33) of carriage guide means (80) lying in a plane not more than 3 mm distant from centre line (71) of shaper carriage (70).

10. Shaping unit as claimed in claim 9, **characterized in that** the aforesaid plane is oriented to extend at right angles to centre line (16) of drive shaft (15).

## Revendications

1. Unité de percussion équipée d'un chariot d'impact (70) guidé sur un carter (20, 40), d'un mécanisme de transmission (100) entraînant le chariot d'impact (70) par un arbre (15) entraîné de l'extérieur et d'un mécanisme de soulèvement sous l'action duquel le chariot d'impact (70), par rapport à sa course de travail (1), revient en arrière contre le mouvement d'avance de l'outil (5), au moins dans une zone partielle de sa course de retour (2), de façon transversalement décalée de 0,05 à 0,4 millimètres par rapport à la course de travail (1),
**caractérisée en ce**
- **que** le mécanisme de transmission (100) est un mécanisme bielle-manivelle avec un arbre d'entraînement (15) agissant par l'intermédiaire d'un maneton (111) et d'une bielle (115) sur le chariot d'impact (70),
- **que** le chariot d'impact (70) est guidé en ligne droite par un guide de chariot (80),
- **que** le corps oscillant (50) est guidé en ligne droite sur le carter (20, 40) dans un guidage (30) qui est incliné de 2 à 6 degrés par rapport au guide de chariot (80).
- **que** le corps oscillant (50) s'applique par le biais d'au moins une came ou au moins une roue d'appui (131, 133) contre un disque d'excentrique (110) entraîné par l'arbre d'entraînement (15).

2. Unité de percussion selon la revendication 1, **caractérisée en ce que** le disque d'excentrique (110) est placé entre deux roues d'appui (131, 133), les lignes médianes (132, 134) des roues d'appui (131, 133) et du disque d'excentrique (110) se trouvant dans un même plan.

3. Unité de percussion selon la revendication 2, **caractérisée en ce que** la distance entre les lignes médianes (132, 134) des roues d'appui (131, 133) est constante pendant une rotation complète du disque d'excentrique (110).

4. Unité de percussion selon la revendication 1, **caractérisée en ce que** le disque d'excentrique (110) a une section limitée par deux arcs de cercle disposés fae à face (121, 123) qui présentent chacun le même angle au centre entre 110 et 130 degrés, les courbes de transition (127, 128) entre les arcs de cercle (121, 123) étant symétriques l'une par rapport à l'autre.

5. Unité de percussion selon la revendication 1, **caractérisée en ce que** la ligne médiane (16) et l'axe de rotation du disque d'excentrique (110) sont orientés perpendiculairement à la majeure partie de la course de travail (1).

6. Unité de percussion selon la revendication 1, **caractérisée en ce que** l'arbre d'entraînement (15) et le maneton (111) sont reliés entre eux par le biais du disque d'excentrique (110), les lignes médianes de l'arbre d'entraînement (15) et du disque d'excentrique (110) étant en coïncidence.

7. Unité de percussion selon la revendication 1, **caractérisée en ce que** la ligne médiane du maneton (111) est orientée parallèlement à la ligne médiane (16) de l'arbre d'entraînement (15).

8. Unité de percussion selon la revendication 1, **caractérisée en ce que** le décalage de la course de retour du chariot d'impact (70) se trouve dans un plan défini par la ligne médiane (71) du chariot d'impact (70) et par la ligne médiane (16) de la broche d'entraînement (15).

9. Unité de percussion selon la revendication 1, **caractérisée en ce que** le guide de chariot (80) est composé de deux paires de barres de guidage (53, 81), le point central ou le centre de gravité des corps de roulement (33) du guide de chariot (80) étant situés dans un plan qui se trouve à une distance maximale de trois millimètres de la ligne médiane (71) du chariot d'impact (70).

10. Unité de percussion selon la revendication 9, **caractérisée en ce que** ce plan est orienté perpendiculairement à la ligne médiane (16) de l'arbre d'entraînement (15).
